# FASCICULE DE BREVET EUROPEEN

(11) **EP 1 846 687 B1**
(45) Date de publication et mention de la délivrance du brevet: **27.03.2013**
(21) Numéro de dépôt: 06709180.1
(22) Date de dépôt: 27.01.2006
(51) Int. Cl.: F16L 37/098, F16L 37/133

(54) **DISPOSITIF DE RACCORDEMENT INSTANTANE AVEC MOYEN DE VERROUILLAGE ET/OU DE DECONNEXION**
SCHNELLKOPPLUNGSVORRICHTUNG MIT VERRIEGELUNGS- UND/ODER LÖSEMECHANISMUS
QUICK-ACTING COUPLING DEVICE WITH LOCKING AND/OR DISCONNECTING MEANS

(30) Priorité: 10.02.2005 FR 0501325
(43) Date de publication de la demande: 24.10.2007
(73) Titulaire: PARKER HANNIFIN MANUFACTURING France SAS, 74100 Ville-la-Grand (FR)
(72) Inventeur: BLIVET, Philippe, F-35200 Rennes (FR); PODER, Philippe, F-35580 Guichen (FR)
(74) Mandataire: Robert, Jean-Pierre
(86) Numéro de dépôt international: PCT/FR2006/000184
(87) Numéro de publication internationale: WO 2006/084969

(56) Documents cités:
- FR-A- 2 863 683
- US-A- 5 029 904
- US-A- 5 890 749

## Description

La présente invention concerne un dispositif de raccordement instantané utilisable par exemple dans un circuit de transport d'un fluide tel que de l'air, pour raccorder une extrémité de conduit à un élément de circuit, émetteur ou récepteur de fluide, comme une conduite, un actionneur, une pompe, un distributeur, ou autre...

### ARRIERE PLAN DE L'INVENTION

Un dispositif de raccordement instantané comprend généralement un corps axialement divisé en une section de liaison à l'élément de circuit et une section de connexion pourvue d'un logement de réception de l'extrémité de conduit et de moyens pour l'y assujettir de façon étanche. Ces moyens comprennent généralement des bras s'étendant axialement depuis la section de connexion et ayant une extrémité libre d'agrippement de l'extrémité de conduit, le bras étant élastiquement déformable entre un état d'agrippement et un état d'échappement de l'extrémité de conduit. Certains dispositifs comprennent une bague montée sur le corps pour coulisser entre une position dans laquelle la bague entoure les extrémités d'agrippement des bras pour maintenir ceux-ci en position d'agrippement, et une position axialement décalée dans laquelle la bague est dégagée des extrémités d'agrippement des bras et autorise la flexion de ceux-ci.

Chacun des documents brevet FR 2 863 683, US-A-5 890 749 et US-A-5 029 904 décrivent des dispositifs de raccordement instantané d'une extrémité de conduit à un élément de circuit.

### OBJET DE L'INVENTION

L'invention a pour objet une alternative performante aux solutions existantes.

### BREVE DESCRIPTION DE L'INVENTION

Selon l'invention, telle que définie par les caractéristiques techniques de la revendication indépendante, on prévoit, un dispositif de raccordement instantané d'une extrémité de conduit à un élément de circuit, comprenant un corps axialement divisé en une section de liaison à l'élément de circuit et une section de connexion pourvue d'un logement de réception de l'extrémité de conduit et de moyens pour l'y assujettir de façon étanche, les moyens d'assujettissement comprenant :
- au moins un bras s'étendant axialement depuis la section de connexion et ayant une extrémité libre d'agrippement de l'extrémité de conduit, le bras étant élastiquement déformable entre un état d'agrippement et un état d'échappement de l'extrémité de conduit,
- une bague de maintien reliée à la section de connexion pour recevoir une partie de l'extrémité de conduit et pour pivoter entre une position de libre déformation du bras et au moins une position de maintien dans laquelle une surface de la bague maintient le bras dans un de ses deux états.

La bague peut ainsi participer au guidage de l'extrémité de conduit dans le corps.

Selon un premier mode de réalisation, lorsque la bague est dans la position de maintien, le bras dans son état d'agrippement est au moins partiellement reçu sous une aile de la bague dont une surface interne s'oppose à une déformation du bras vers son état d'échappement.

Cette structure est particulièrement simple et efficace.

De préférence alors, la surface interne de l'aile et une surface externe du bras comprennent des reliefs réciproques coopérant ensemble lorsque la bague est en position de maintien pour retenir de manière amovible la bague dans sa position de maintien.

Ainsi, le risque d'une manoeuvre accidentelle de la bague est limité.

Selon un deuxième mode de réalisation, lorsque la bague est dans la position de maintien, le bras coopère avec une rampe de la bague soulevant le bras pour amener celui-ci dans son état d'échappement.

Cet agencement permet de faciliter la déconnexion de l'extrémité de conduit.

Selon un troisième mode de réalisation combinant les avantages des deux précédents, la bague possède deux positions de maintien décalées angulairement l'une par rapport à l'autre, et de préférence, les deux positions de maintien sont situées de part et d'autre de la position de libre déformation.

Avantageusement, le logement reçoit au moins un élément d'étanchéité et la bague comprend une portion tubulaire de butée agencée pour retenir l'élément d'étanchéité dans le logement et, de préférence, la portion tubulaire de butée est reçue à pivotement dans le logement.

Ainsi, la bague exerce une fonction supplémentaire de retenue de l'élément d'étanchéité dans le logement, ce qui permet de limiter le nombre de pièces constituant le dispositif de raccordement.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue en perspective et en éclaté du dispositif de raccordement conforme à l'invention,
- la figure 2 est une vue en perspective de ce dispositif de raccordement, la bague de maintien étant dans une position de connexion instantanée,
- la figure 3 est une vue analogue à celle de la figure 2 lors de l'introduction d'un embout dans le dispositif,
- la figue 4 est une vue en perspective et en coupe selon le plan IV de la figure 2 de ce dispositif de raccordement,
- la figure 5 est une vue en perspective et en coupe de ce dispositif, la bague de maintien étant dans une position de verrouillage de la connexion,
- la figure 6 est une vue analogue à celle de la figure 5, la bague de verrouillage étant dans une position de déconnexion,
- la figure 7 est une vue en élévation du dispositif de raccordement représenté aux figures 2 et 4,
- la figure 8 est une vue en perspective éclatée, avec une demi-coupe axiale, d'un dispositif de raccordement selon une première variante de réalisation,
- les figures 9 et 10 sont des vues en perspective d'un dispositif de raccordement selon une deuxième variante de réalisation, la bague de maintien étant respectivement en position de connexion instantanée et en position de verrouillage de la connexion,
- les figues 11 et 12 sont des vues analogues à celles des figures 9 et 10 d'un dispositif de raccordement conforme à une troisième variante de réalisation,
- la figure 13 est une vue analogue à la figure 5 d'un dispositif de raccordement selon une quatrième variante de réalisation.

### DESCRIPTION DETAILLEE DE L'INVENTION

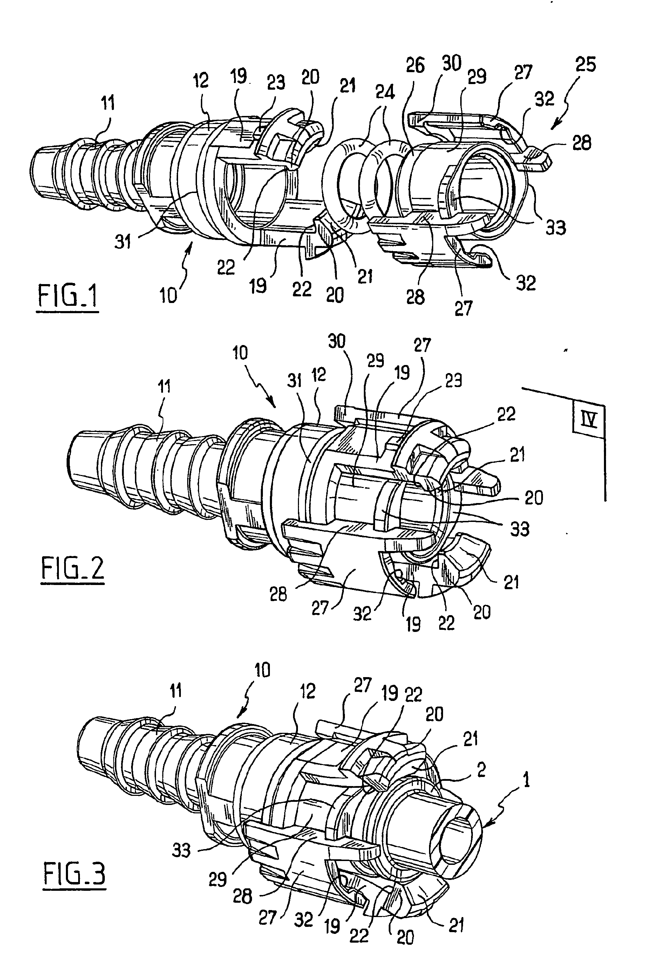

En référence aux figures. 1 à 7, le dispositif de raccordement conforme à l'invention est destiné à permettre le raccordement d'un embout 1 pourvu d'une collerette externe 2 à un élément de circuit non représenté, en l'espèce une conduite. L'élément de circuit peut être émetteur ou récepteur de fluide comme par exemple, outre une conduite, un distributeur, un actionneur, une pompe, un réservoir, un filtre, une vanne... L'embout 1 peut par ailleurs être associé à un élément de circuit de ce type.

Le dispositif conforme à l'invention comprend un corps généralement désigné en 10, de forme tubulaire délimitant un canal étagé généralement désigné en 13. Le corps 10 est axialement divisé en une section de liaison 11 à la conduite et une section de connexion 12 de l'embout 1.

La section de liaison 11 délimite un tronçon d'extrémité 16 du canal 13 et est ici pourvue extérieurement de reliefs en dents de sapin. Le tronçon d'extrémité 16 du canal 13 a un diamètre interne sensiblement égal au diamètre de l'embout 1. La section de liaison 11 est destinée à être emmanchée à force dans une extrémité de la conduite à raccorder. La section de liaison 11 peut également être en une seule pièce avec l'élément de circuit ou soudée à celui-ci, ou bien encore être agencée pour être encliquetée dans ou sur un embout solidaire de l'élément de circuit. La section de liaison 11 peut en outre être agencée comme la section de connexion 12.

La section de connexion 12 délimite un tronçon d'extrémité 14 et un tronçon intermédiaire 15 du canal 13. Le tronçon d'extrémité 14 débouche à l'extérieur du corps 10 d'un côté de celui-ci opposé à la section de liaison 11 et le tronçon intermédiaire 15 s'étend entre les tronçons d'extrémité 14 et 16. Le tronçon intermédiaire 15 a un diamètre légèrement supérieur au diamètre externe de l'embout 1 et le tronçon 14 a un diamètre supérieur au diamètre du tronçon 15. Des épaulements 17, 18 s'étendent respectivement entre le tronçon d'extrémité 16 et le tronçon intermédiaire 15 et entre le tronçon intermédiaire 15 et le tronçon d'extrémité 14. Les tronçons 14 et 15 forment ainsi un logement pour accueillir la portion d'extrémité libre de l'embout 1.

Le corps 10 comprend deux bras 19 qui s'étendent en vis-à-vis l'un de l'autre et axialement en saillie depuis la section de connexion 12. Ces bras 19 ont une extrémité libre ou extrémité d'agrippement pourvue d'un redan interne 20 dont une face avant 21 est tronconique concave et une face arrière 22 est radiale. Les bras 19 sont élastiquement déformables entre un état de repos, dit état d'agrippement, dans lequel les redans internes 20 définissent une section de passage de diamètre inférieur au diamètre externe de la collerette 2, et un état déformé, dit état d'échappement, dans lequel les redans externes 20 définissent une section de passage de diamètre égal ou supérieur au diamètre externe de la collerette 2. Les bras 19 comprennent en outre un redan externe 23.

Des éléments d'étanchéité 24 de forme annulaire sont reçus dans le tronçon d'extrémité 14 au voisinage de l'épaulement 18.

Le dispositif de raccordement comprend une bague de maintien généralement désignée en 25 qui est reçue entre les bras 19 et comporte une portion principale 29 et une portion d'extrémité 26 reçue dans le tronçon d'extrémité 14, de telle manière que la bague de maintien 25 puisse pivoter entre deux positions extrêmes qui seront détaillées ci-après. La portion d'extrémité 26 de la bague de maintien 25 assure la retenue des éléments d'étanchéité 24 dans le tronçon d'extrémité 14. La portion principale 29 a un diamètre interne légèrement supérieur au diamètre externe de la portion d'extrémité de l'embout 1 et un diamètre externe supérieur au diamètre interne du tronçon d'extrémité 14 et inférieur à la distance séparant les bras 19. La portion d'extrémité 26 a un diamètre interne légèrement supérieur au diamètre externe de la portion d'extrémité de l'embout 1 et un diamètre externe légèrement inférieur au diamètre interne du tronçon d'extrémité 14. La bague de maintien 25 comprend, entre les portions 26 et 29, un épaulement externe formant une butée à l'enfoncement de la bague de maintien 25 dans le tronçon d'extrémité 14.

La bague de maintien 25 comprend deux ailes 27 externes et ici diamétralement opposées. Les ailes 27 sont incurvées et s'étendent parallèlement à la surface externe de la portion principale 29 à distance de celle-ci de telle manière que, dans l'une des positions extrêmes de la bague de maintien 25, chaque bras 19 puisse être reçu entre une des ailes 27 et la surface externe de la portion principale 29. Chaque aile 27 a un bord, parallèle à l'axe de la bague de maintien 25, relié à la portion principale 29 par une paroi radiale 28 qui s'étend entre les deux bras 19.

Chaque aile 27 possède, du côté de la section de liaison 11, un bord circonférenciel possédant un redan 30 reçu dans une gorge externe 31 de la section de connexion 12 de manière que la retenue de la bague de maintien 25 dans la section de connexion 12 soit assurée par clipsage. Une nervure 34 s'étend dans la gorge externe 31 pour former une butée pour le redan 30 pour indexer la bague de maintien 25 par rapport aux bras 19 comme cela sera détaillé plus loin. Chaque aile 27 possède en outre une surface interne pourvue d'un renfoncement 32 pour recevoir le redan externe 23 du bras 19 correspondant.

Au voisinage de la paroi radiale 28 de chaque aile 27, à l'opposé de cette dernière, une rampe 33 s'étend le long d'une direction circonférencielle de la portion principale 29 en saillie radiale externe de celle-ci.

Les deux positions extrêmes de la bague de maintien 25 vont maintenant être explicitées.

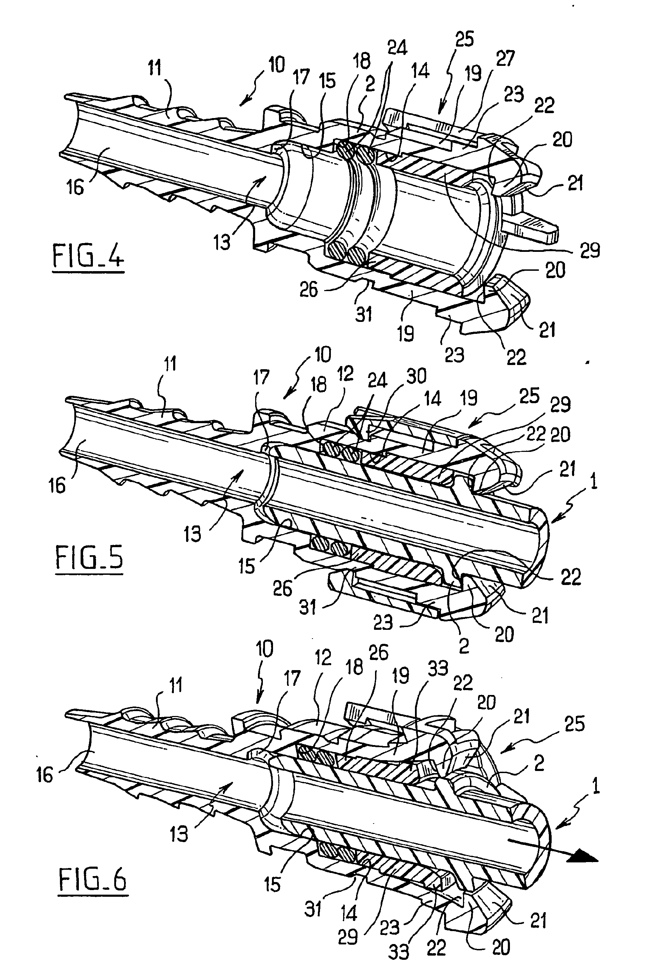

Dans la première des positions extrêmes, ou position de verrouillage (représentée à la figure 5), chaque aile 27 recouvre un des bras 19 et a une surface interne maintenant le bras 19 dans son état d'agrippement en s'opposant à une déformation de ce bras 19 vers son état d'échappement. Le redan externe 23 de chaque bras 19 et le renfoncement 32 de chaque aile 27 recevant le redan externe 23 permettent d'assurer par clipsage une retenue amovible de la bague de maintien 25 dans sa position de verrouillage. Les redans externes 23 et les renfoncements 32 constituent des moyens d'indexation de la bague de maintien 25 dans sa position de verrouillage.

Dans la deuxième position extrême ou position de déconnexion, représentée à la figure 6, chaque rampe 33 s'étend sous un des bras 19 pour déformer celui-ci dans son état d'échappement.

Entre ces deux positions extrêmes, la bague de maintien 25 possède une position intermédiaire, ou position de libre déformation dite également position de connexion instantanée, dans laquelle chaque bras 19 est dégagé de la rampe 33 et de l'aile 27 correspondantes pour pouvoir librement se déformer entre ses deux états.

Pour effectuer la connexion, l'embout 1 est introduit dans le dispositif de raccordement alors que la bague de maintien est dans sa position de connexion instantanée (voir les figures 2 à 4). La portion d'extrémité libre de l'embout 1 est ainsi introduite successivement dans les portions 29, 26 de la bague de maintien 25 et le tronçon d'extrémité 14, les éléments d'étanchéité 24 et le tronçon intermédiaire 15 jusqu'à ce que la collerette 2 arrive en butée contre la bague de maintien 25. Lors de l'introduction de l'embout 1, la collerette externe 2 rencontre la face avant 21 du redan externe 20 de l'extrémité d'agrippement des bras 19 qui glisse sur la collerette externe 2 et provoque la déformation des bras 19 de leur état d'agrippement à leur état d'échappement (voir la figure 3).

Une fois la collerette 2 passée, les bras 19 reviennent élastiquement dans leur état d'agrippement et la face arrière 22 des redans externes 20 vient s'opposer à un mouvement d'extraction de l'embout 1 hors du dispositif de raccordement.

Pour verrouiller la connexion, la bague de maintien 25 est pivotée manuellement pour amener les bras 19 sous les ailes 27 de manière que celles-ci s'opposent à une déformation des bras 19 vers leur état d'échappement (voir la figure 5). Pour ce faire, il faut faire passer le redan 30 sur la nervure 34 (le redan 30 a une extrémité biseautée constituant une rampe de soulèvement de l'aile 27 pour faciliter le passage du redan 30 pardessus la nervure 34) puis engager les redans externes 23 dans les renfoncements 32. La bague de maintien 25 est alors dans sa position de verrouillage.

On notera que la bague de maintien 25 participe ici au guidage de l'embout 1 dans le dispositif de raccordement. Ceci permet d'améliorer l'étanchéité du dispositif de raccordement en limitant les jeux et le risque d'ovalisation de l'embout sous des efforts de flexion.

La déconnexion est réalisée en faisant pivoter la bague de maintien 25 vers sa position de déconnexion. Lors de ce pivotement, les bras 19 vont glisser sur les rampes 33 qui vont provoquer un soulèvement des bras 19 déformant ceux-ci dans leur état d'échappement (voir la figure 6). L'embout 1 peut alors être extrait du dispositif de raccordement.

On notera que les rampes 33 s'opposent à une rotation accidentelle de la bague de maintien 25 de sa position de libre déformation vers sa position de déconnexion. En effet, la résistance des bras 19 à leur déformation vers leur état d'échappement engendre une résistance au pivotement de la bague de maintien 25 vers la position de déconnexion. En outre, la nervure 34 située dans la gorge externe 31 de la section de connexion 12 forme une butée pour le redan 30. L'effort nécessaire au passage du redan 30 de chaque aile 27 sur la nervure 34 (résultant de la résistance de l'aile 27 à sa déformation pour faire passer le redan 30) s'oppose à un pivotement accidentel de la bague de maintien 25 de sa position de libre déformation vers sa position de verrouillage. Il en résulte qu'une indexation de la bague de maintien 25 en position de connexion instantanée est ainsi réalisée.

De préférence, la nervure 34 et le redan 30 sont agencés (hauteur et inclinaison des faces en contact) de manière à engendrer une résistance au pivotement de la bague de maintien 25 de sa position de connexion instantanée vers sa position de verrouillage qui soit inférieure à l'effort à employer pour faire sortir les redans 23 des renfoncements 32 lors du pivotement de la bague de maintien 25 de sa position de verrouillage vers sa position de connexion instantanée. Il est ainsi plus facile d'amener la bague de maintien 25 en position de verrouillage que de l'en faire partir. Le risque d'un déverrouillage accidentel est de la sorte limité.

Ce dispositif de raccordement présente l'avantage d'être facilement démontable et de présenter un nombre réduit de pièces, ce qui facilite son recyclage en fin de vie.

Les éléments identiques ou analogues à ceux précédemment décrits porteront une référence numérique identique dans la description qui suit de variantes de réalisation et dans les figures correspondantes.

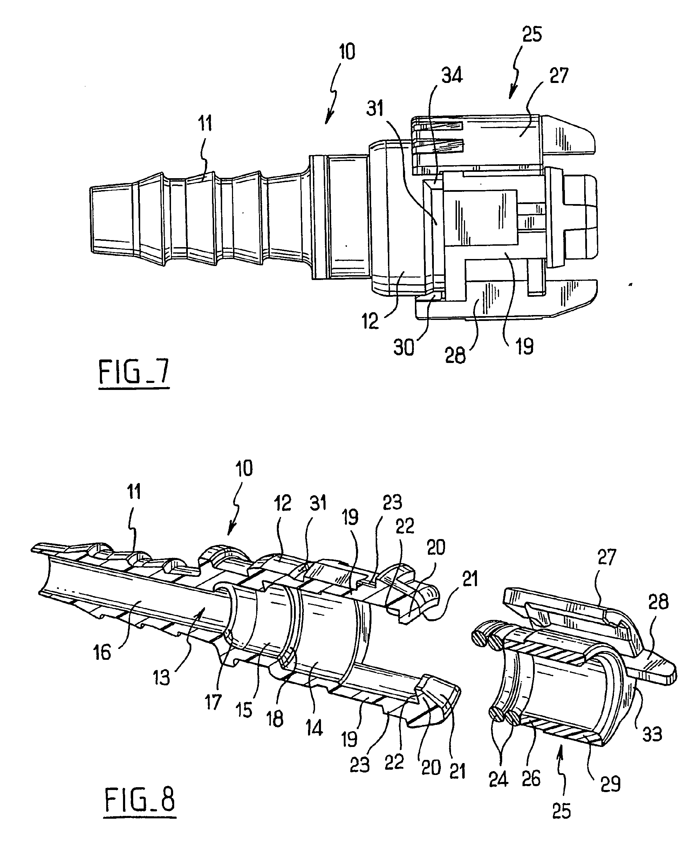

Selon une première variante représentée à la figure 8, les éléments d'étanchéité 24 sont solidaires de la portion d'extrémité 26 de la bague de maintien 25. Les éléments d'étanchéité peuvent être fixés à la portion d'extrémité 26 par collage, par surmoulage ou par moulage bi-injection (injection d'un thermoplastique élastomère compatible avec le matériau de la bague de manoeuvre 25 dans un moule recevant la bague de maintien et présentant une empreinte correspondant aux éléments d'étanchéité). Bien évidemment, seul un des éléments d'étanchéité peut être solidaire de la bague de maintien.

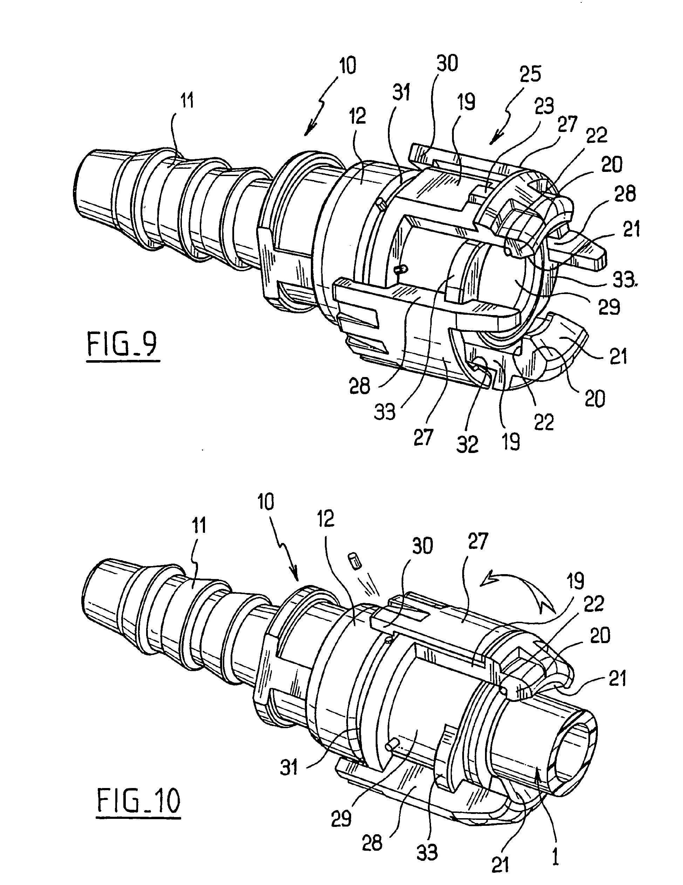

Selon une deuxième variante représentée aux figures 9 et 10, le dispositif de raccordement comprend des témoins de verrouillage et déverrouillage.

Le témoin de déverrouillage est formé par un ergot 35 sécable s'étendant en saillie externe de la partie principale 29 de la bague de maintien 25 sur le trajet d'un des bras 19 lors du pivotement de la bague de maintien 25 de sa position de libre déformation vers sa position de déconnexion. L'ergot 35 est ici situé en regard de la rampe 33 dans une position axialement décalée vers la section de connexion 22.

Lorsque la bague de maintien 25 est pivotée vers sa position de déconnexion, l'ergot 35 rencontre le bras 19 (au voisinage de l'extrémité de celui-ci reliée à la section de connexion 12) et se brise sous l'effort de pivotement. Il est ainsi possible de vérifier qu'une déconnexion résulte bien d'une manoeuvre de déverrouillage et non pas d'une défaillance du dispositif de raccordement en position de connexion instantanée ou en position de verrouillage.

Le témoin de verrouillage est formé par un ergot 36 sécable s'étendant en saillie externe de la section de connexion 12, ici dans la gorge 31, sur le trajet du redan 30 d'une des ailes 27 en fin de pivotement de la bague de maintien 25 vers sa position de verrouillage. La disposition de l'ergot 36 dans la gorge 31 permet de limiter l'exposition de l'ergot 36 à des chocs qui pourraient survenir par exemple lors de la manipulation du dispositif et qui risqueraient de briser accidentellement l'ergot 36.

A la fin du pivotement de la bague de maintien 25 vers sa position de verrouillage, l'ergot 36 rencontre le redan 30 et se brise sous l'effort de pivotement (figure 10). Il est ainsi possible de vérifier, après un déverrouillage anonyme ou accidentel, que le dispositif de raccordement avait bien été verrouillé et qu'il s'agit bien d'un déverrouillage et non d'un oubli de verrouillage.

Ces témoins permettent ainsi de détecter des manoeuvres de la bague de maintien 25.

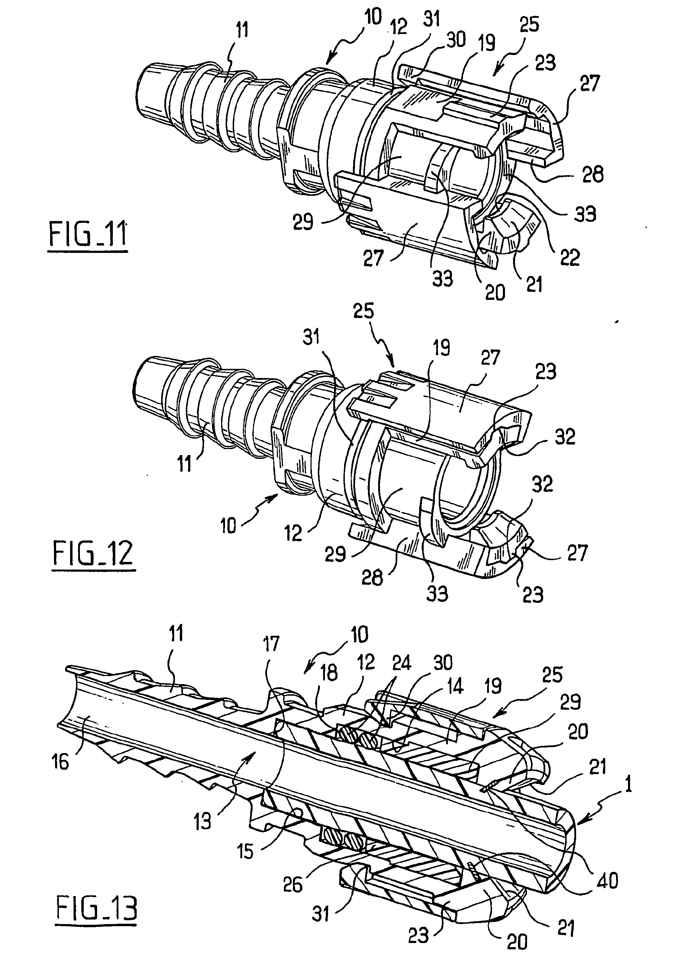

Selon une troisième variante représentée aux figures 11 et 12, la bague de maintien 25 est agencée pour contraster visuellement avec les bras 19 et/ou la totalité du corps 10. En l'espèce la bague de maintien 25 est dans un matériau de couleur différente de celle du matériau du corps 10.

Les ailes 27 sont agencées pour recouvrir la majeure partie des bras 19 lorsque la bague de maintien 25 est en position de verrouillage. Dans cette position, représentée à la figure 12, les ailes 27 masquent ici en totalité les bras 19. L'extrémité du dispositif de raccordement (côté section de connexion 12) est alors de la couleur de la bague de maintien 25.

Lorsque la bague de maintien 25 est en position de connexion instantanée (figure 11) ou en position de déconnexion, les bras 19 sont visibles entre les ailes 27. L'extrémité du dispositif de raccordement est alors bicolore.

La visualisation des portions de la bague de maintien est ainsi simplifiée.

En outre, dans cette variante, lorsque la bague de maintien 25 est en position de verrouillage, l'extrémité libre des bras 19 est recouverte par les ailes 27 qui contribue à raidir les bras 19 sur toute leur longueur.

Bien entendu, l'invention n'est pas limitée aux modes de réalisation décrits et on peut y apporter des variantes de réalisation sans sortir du cadre de l'invention tel que défini par les revendications.

En particulier, on peut prévoir que les bras aient des extrémités agencées pour serrer une extrémité de conduit lisse et/ou mordre dans la surface externe de celle-ci. Il est représenté à la figure 8 une quatrième variante de réalisation dans laquelle les bras 19 ont une extrémité libre pourvue intérieurement d'une dent 40 (ici la dent 40 est métallique et a une extrémité enchâssée dans le bras 19 et une extrémité libre en saillie de telle manière que la dent 40 soit inclinée vers l'intérieur du corps 10) agencée pour mordre la surface externe d'un conduit lisse. On notera que le conduit lisse est ici en butée contre l'épaulement 17 formant une butée à l'enfoncement du conduit dans le corps 10.

Il est possible de prévoir des moyens d'indexation de la bague de maintien 25 dans sa position de déconnexion. Les moyens d'indexation, quelles que soient les positions, sont toutefois facultatifs.

Le dispositif de raccordement peut être agencé de telle manière que l'épaulement 17 serve de butée à l'enfoncement de l'embout 1 dans le corps 10. Dans ce cas, la distance entre l'épaulement 17 et la surface frontale de la portion principale 29 de la bague de maintien 25 est inférieure à la distance entre la face frontale de l'embout 1 et la face avant de la collerette 2 (par référence à un sens d'enfoncement de l'embout dans le dispositif de raccordement).

L'agencement du corps 10 et de la bague de maintien 25 peut subir quelques modifications. Le nombre de bras et d'ailes peut ainsi être différent de deux, le corps peut être coudé, la bague peut être agencée pour ne posséder qu'une position de maintien...

Une ou des butées en rotation peuvent être agencées sur le corps 10 pour éviter que la bague de maintien 25 ne soit pivotée au-delà de ses positions extrêmes.

L'extrémité de conduit peut être un embout rapporté sur un élément de circuit ou en une seule pièce avec celui-ci (figures 1 à 7 par exemple) ou une extrémité d'une conduite ou d'un tube ou tuyau (figure 13 par exemple).

Le nombre et l'agencement des éléments d'étanchéité peuvent être différents de ceux décrits. Le dispositif peut par exemple ne comporter qu'un seul élément d'étanchéité.

## Revendications

1. Dispositif de raccordement instantané d'une extrémité de conduit à un élément de circuit, comprenant un corps (10) axialement divisé en une section de liaison (11) à l'élément de circuit et une section de connexion (12) pourvue d'un logement (14, 15) de réception de l'extrémité de conduit et de moyens (19, 24, 25) pour l'y assujettir de façon étanche, **caractérisé en ce que** ces moyens d'assujettissement comprennent :
- au moins un bras (19) s'étendant axialement depuis la section de connexion et ayant une extrémité libre d'agrippement (20) de l'extrémité de conduit, le bras étant élastiquement déformable entre un état d'agrippement et un état d'échappement de l'extrémité de conduit,
- une bague (25) de maintien reliée à la section de connexion (12) pour recevoir une partie de l'extrémité de conduit et pour pivoter entre une position de libre déformation du bras et au moins une position de maintien dans laquelle une surface de la bague maintient le bras dans un de ses deux états, cette bague (25) étant agencée pour participer au guidage de l'extrémité de conduit dans le corps (10).

2. Dispositif selon la revendication 1, **caractérisé en ce que**, dans la position de maintien, le bras (19) dans son état d'agrippement est au moins partiellement reçu sous une aile (27) de la bague (25) dont une surface interne s'oppose à une déformation du bras vers son état d'échappement.

3. Dispositif selon la revendication 2, **caractérisé en ce que** la surface interne de l'aile (27) et une surface externe du bras (19) comprennent des reliefs réciproques (23, 32) coopérant ensemble lorsque la bague (25) est en position de maintien pour retenir de manière amovible la bague dans sa position de maintien.

4. Dispositif selon la revendication 1, **caractérisé en ce que**, dans la position de maintien, le bras (19) coopère avec une rampe (33) de la bague (25) soulevant le bras pour amener celui-ci dans son état d'échappement.

5. Dispositif selon la revendication 1, **caractérisé en ce que** la bague (25) possède deux positions de maintien décalées angulairement l'une par rapport à l'autre.

6. Dispositif selon la revendication 5, **caractérisé en ce que** les deux positions de maintien sont situées de part et d'autre de la position de libre déformation.

7. Dispositif selon la revendication 1, **caractérisé en ce que** le logement (14, 15) reçoit au moins un élément d'étanchéité (24) et **en ce que** la bague (25) comprend une portion tubulaire de butée (26) agencée pour retenir l'élément d'étanchéité dans le logement.

8. Dispositif selon la revendication 7, **caractérisé en ce que** la portion tubulaire de butée (26) est reçue à pivotement dans le logement.

9. Dispositif selon la revendication 7, **caractérisé en ce que** l'élément d'étanchéité (24) est solidaire de la portion tubulaire de butée (26) de la bague (25).

10. Dispositif selon la revendication 1, **caractérisé en ce qu'**il comprend un moyen d'indexation de la bague (25) par rapport au corps (10) au moins pour l'une des positions de la bague.

11. Dispositif selon la revendication 1, **caractérisé en ce que** les moyens d'assujettissement comprennent deux bras entre lesquels la bague est reçue.

12. Dispositif selon la revendication 1, **caractérisé en ce que** l'extrémité d'agrippement de chaque bras (19) comprend une dent (40) pour mordre une surface externe de l'embout lorsque le bras est dans l'état d'agrippement.

13. Dispositif selon la revendication 1, **caractérisé en ce qu'**il comprend au moins un témoin sécable (35, 36) agencé pour être brisé lorsque la bague de maintien (25) est pivotée dans sa position de maintien.

14. Dispositif selon la revendication 13, **caractérisé en ce que** le témoin sécable comprend un ergot (36) solidaire de la section de connexion (12) pour rencontrer une partie (20) de la bague de manoeuvre (25) en fin de pivotement de celle-ci dans la position de maintien.

15. Dispositif selon la revendication 14, **caractérisé en ce que** l'ergot (36) est situé, en saillie au fond d'une gorge (31) dans laquelle coulisse la partie (30) de la bague de manoeuvre (25).

16. Dispositif selon la revendication 1, **caractérisé en ce que** la bague de maintien (25) est agencée pour contraster visuellement avec le bras (19) au moins et pour masquer le bras lorsque la bague est dans sa position de maintien.

## Claims

1. An instant coupling device for coupling a pipe end to a circuit element, the device comprising a body (10) axially subdivided into a joining section (11) for joining to the circuit element and a connection section (12) provided with a housing (14, 15) for receiving the pipe end, and means (19, 24, 25) for engaging it in leaktight manner, the device being **characterized in that** the engagement means comprise:
· at least one arm (19) extending axially from the connection section and having a free, gripper end (20) for gripping the pipe end, the arm being elastically deformable between a gripping state and a release state for releasing the pipe end; and
· a holding ring (25) connected to the connection section to receive a portion of the pipe end and to pivot between a position allowing free deformation of the arm, and at least one holding position in which a surface of the ring holds the arm in one of its two states, said ring (25) being arranged to participate to the guiding of the pipe end in the body (10).

2. A device according to claim 1, **characterized in that**, in the holding position, the arm (19) in its gripping state is received at least in part under a flap (27) of the ring (25) having an inside surface that opposes deformation of the arm towards its release state.

3. A device according to claim 2, **characterized in that** the inside surface of the flap (27) and an outside arm (19) have complementary portions in relief (23, 32) for co-operating when the ring (25) is in the holding position to retain the ring releasably in its holding position.

4. A device according to claim 1, **characterized in that**, in the holding position, the arm (19) co-operates with a ramp (33) of the ring (25) for lifting the arm to bring it into its release state.

5. A device according to claim 1, **characterized in that** the ring (25) possesses two holding positions that are angularly offset from each other.

6. A device according to claim 5, **characterized in that** the two holding positions are situated on either side of the free deformation position.

7. A device according to claim 1, **characterized in that** the housing (14, 15) receives at least one sealing element (24), and **in that** the ring (25) includes a tubular abutment portion (26) arranged to retain the sealing element in the housing.

8. A device according to claim 7, **characterized in that** the tubular abutment portion (26) is pivotally received in the housing.

9. A device according to claim 7, **characterized in that** the sealing element (24) is secured to the tubular abutment portion (26) of the ring (25).

10. A device according to claim 1, **characterized in that** it includes indexing means for indexing the ring (25) relative to the body (10) for at least one of the positions of the ring.

11. A device according to claim 1, **characterized in that** the engagement means have two arms between which the ring is received.

12. A device according to claim 1, **characterized in that** the gripper end of each arm (19) includes a tooth (40) for biting into the outside surface of the endpiece when the arm is in the gripping state.

13. A device according to claim 1, **characterized in that** it includes at least one breakable indicator (35, 36) arranged to be broken when the holding ring (25) is pivoted into its holding position.

14. A device according to claim 13, **characterized in that** the breakable indicator comprises a stud (36) secured to the connection section (12) to engage a portion (20) of the holding ring (25) at the end of its pivoting into the holding position.

15. A device according to claim 14, **characterized in that** the stud (36) projects from the bottom of a groove (31) in which the portion (30) of the holding ring (25) slides.

16. A device according to claim 1, **characterized in that** the holding ring (25) is arranged to contrast visually with the arm (19), at least to mask the arm when the ring is in its holding position.

## Patentansprüche

1. Schnellverbindungsvorrichtung zum Verbinden eines Leitungsendes mit einem Leitungselement, umfassend einen Körper (10), der axial in einen Verbindungsabschnitt (11) zum Verbinden mit dem Leitungselement und in einen Anschlussabschnitt (12) aufgeteilt ist, der mit einem Sitz (14, 15) zum Aufnehmen des Leitungsendes und mit Mitteln (19, 24, 25) für seine dichte Befestigung an dieser Stelle versehen ist, **dadurch gekennzeichnet, dass** diese Befestigungsmittel umfassen:
- mindestens einen Arm (19), der sich axial vom Anschlussabschnitt erstreckt und ein freies Ende (20) zum Festhalten des Leitungsendes aufweist, wobei der Arm zwischen einem Festhaltezustand und einem Freigabezustand des Leitungsendes elastisch verformbar ist;
- einen Haltering (25), der mit dem Anschlussabschnitt (12) verbunden ist zum Aufnehmen eines Abschnittes des Leitungsendes und zum Drehen zwischen einer Position der freien Deformation des Armes und mindestens einer Halteposition, in der eine Oberfläche des Ringes den Arm in einem seiner beiden Zustände hält, wobei dieser Ring (25) so ausgebildet ist, dass er beim Führen des Leitungsendes im Körper (10) mitwirkt.

2. Vorrichtung nach Anspruch 1, **dadurch gekennzeichnet, dass** in der Halteposition der Arm (19) in seinem Festhaltezustand mindestens teilweise unter einem Flügel (27) des Ringes (25) aufgenommen ist, von dem eine Innenfläche einer Deformation des Armes in Richtung seines Freigabezustandes entgegenwirkt.

3. Vorrichtung nach Anspruch 2, **dadurch gekennzeichnet, dass** die Innenfläche des Flügels (27) und eine Außenfläche des Armes (19) reziproke Reliefs (23, 32) aufweisen, die zusammenwirken, wenn sich der Ring (25) in der Halteposition befindet, um den Ring lösbar in seiner Halteposition zu halten.

4. Vorrichtung nach Anspruch 1, **dadurch gekennzeichnet, dass** der Arm (19) in der Halteposition mit einer Rampe (33) des Ringes (25) zusammenwirkt, welche den Arm anhebt, um diesen in seinen Freigabezustand zu bringen.

5. Vorrichtung nach Anspruch 1, **dadurch gekennzeichnet, dass** der Ring (25) zwei Haltepositionen besitzt, die gegeneinander winkelversetzt sind.

6. Vorrichtung nach Anspruch 5, **dadurch gekennzeichnet, dass** sich die beiden Haltepositionen auf beiden Seiten der Position einer freien Deformation befinden.

7. Vorrichtung nach Anspruch 1, **dadurch gekennzeichnet, dass** der Sitz (14, 15) mindestens ein Dichtungselement (24) aufnimmt und dass der Ring (25) einen rohrförmigen Anschlagsabschnitt (26) umfasst, der so ausgebildet ist, dass das Dichtungselement in dem Sitz gehalten ist.

8. Vorrichtung nach Anspruch 7, **dadurch gekennzeichnet, dass** der rohrförmige Anschlagsabschnitt (26) in dem Sitz drehbar gelagert aufgenommen ist.

9. Vorrichtung nach Anspruch 7, **dadurch gekennzeichnet, dass** das Dichtungselement (24) mit dem rohrförmigen Anschlagsabschnitt (26) des Ringes (25) verbunden ist.

10. Vorrichtung nach Anspruch 1, **dadurch gekennzeichnet, dass** sie ein Mittel zur Indexierung des Ringes (25) relativ zum Körper (10) mindestens für eine der Positionen des Ringes umfasst.

11. Vorrichtung nach Anspruch 1, **dadurch gekennzeichnet, dass** die Befestigungsungsmittel zwei Arme umfassen, zwischen denen der Ring aufgenommen ist.

12. Vorrichtung nach Anspruch 1, **dadurch gekennzeichnet, dass** das Festhalteende eines jeden Armes (19) einen Zahn (40) zum Eingreifen in eine Außenfläche des Stutzens umfasst, wenn sich der Arm im Festhaltezustand befindet.

13. Vorrichtung nach Anspruch 1, **dadurch gekennzeichnet, dass** sie mindestens ein teilbares Anzeigeelement (35, 36) umfasst, das so ausgebildet ist, dass es zerbricht, wenn der Haltering (25) in seiner Halteposition gedreht wird.

14. Vorrichtung nach Anspruch 13, **dadurch gekennzeichnet, dass** das teilbare Anzeigeelement einen Zapfen (36) umfasst, der fest mit dem Anschlussabschnitt (12) verbunden ist, um auf einen Abschnitt (20) des Betätigungsringes (25) zu treffen, wenn sich dieser am Ende der Drehung in der Halteposition befindet.

15. Vorrichtung nach Anspruch 14, **dadurch gekennzeichnet, dass** der Zapfen (36) vom Boden einer Nut (31) absteht, in der der Abschnitt (30) des Betätigungsringes (25) gleitet.

16. Vorrichtung nach Anspruch 1, **dadurch gekennzeichnet, dass** der Haltering (25) so ausgebildet ist, dass er mindestens sichtbar mit dem Arm (19) kontrastiert und dass er den Arm überdeckt, wenn sich der Ring in seiner Halteposition befindet.
